# EUROPÄISCHE PATENTSCHRIFT

(11) **EP 1 963 137 B1**
(45) Veröffentlichungstag und Bekanntmachung des Hinweises auf die Patenterteilung: **26.09.2012**
(21) Anmeldenummer: 06829429.7
(22) Anmeldetag: 08.12.2006
(51) Int. Cl.: B60R 16/03, H02J 7/34, H02J 9/06

(54) **KURZZEIT-SPANNUNGSVERSORGUNG**
TEMPORARY VOLTAGE SUPPLY
ALIMENTATION DE TENSION DE COURTE DUREE

(30) Priorität: 12.12.2005 DE 102005059246
(43) Veröffentlichungstag der Anmeldung: 03.09.2008
(73) Patentinhaber: KNORR-BREMSE Systeme für Nutzfahrzeuge GmbH, 80809 München (DE)
(72) Erfinder: HERGES, Michael, 80935 München (DE); MILLER, Bernhard, 71263 Weil der Stadt (DE)
(74) Vertreter: Schönmann, Kurt
(86) Internationale Anmeldenummer: PCT/EP2006/011828
(87) Internationale Veröffentlichungsnummer: WO 2007/068405

(56) Entgegenhaltungen:
- EP-A- 0 924 834
- EP-A1- 0 453 236
- EP-A2- 0 624 944

## Beschreibung

Die Erfindung betrifft eine Einrichtung für eine Spannungsversorgung, und bezieht sich insbesondere auf eine Schaltungsanordnung für eine Kurzzeit-Spannungsversorgung elektrischer Systeme nach dem Patentanspruch 1.

Bei elektrischen Systemen finden sich häufig sicherheitsrelevante Einrichtungen, welche bei normalen Ausschaltvorgängen, aber auch bei beispielsweise einem Ausfall der normalen Betriebsstrom- oder Betriebsspannungsversorgung noch über genügend Energie verfügen müssen, um noch einen letzten Betriebsablauf ausführen und so in einen definierten, gesicherten Endzustand gelangen zu können.

Ein Beispiel hierfür ist ein elektronisch gesteuertes Feststellbremssystem für Nutzfahrzeuge. Wird bei einem solchen System bei einem Ausfall der elektrischen Versorgung, beispielsweise durch einen Kurzschluss in der Fahrzeugbatterie, die Feststellbremse nicht aktiviert, besteht zum Einen die Gefahr, dass das Fahrzeug nicht mehr sicher abgestellt werden kann. Zum Anderen darf jedoch die Feststellbremse bei einem Ausfall der elektrischen Versorgung nicht in jedem Fall gleichzeitig und automatisch aktiviert werden, da dies bei einem noch nicht zum Stillstand gekommenen Fahrzeug zu einem instabilen Fahrverhalten sowie zu einer unvermittelt starken Verzögerung ohne Aufleuchten der Bremsleuchten führen kann, wodurch die Unfallgefahr signifikant erhöht wird. Daher muss, nachdem das Fahrzeug nach einem Ausfall der elektrischen Versorgung zum Stillstand gekommen ist, eine solche Feststellbremse durch den Fahrer noch einmal aktivierbar sein, damit das Fahrzeug gegen Wegrollen sicherbar bleibt.

Bisher wurden derartige Probleme mittels redundanten Spannungsversorgungen aus zumindest zwei wechselseitig gegeneinander abgesicherten Energiespeichern großer Kapazität oder durch eine eigenständige, d.h. separat angeordnete, Notstromversorgung umgangen. Die bekannten Lösungen sind jedoch dahingehend nachteilig, dass mehrere Energiespeicher teuer, aufwendig zu realisieren und zudem schlecht überwachbar sind, und eine separate Notstromversorgung aufgrund einer permanenten Selbstentladung stark überdimensioniert sein muss, welches ebenfalls in hohen Kosten und hohem konstruktivem Aufwand resultiert.

Zudem ist die benötigte Energie zur Durchführung eines letzten Betriebsablaufs (einer "finalen Aktion") der Feststellbremse häufig klein, so dass die bekannten Lösungen den tatsächlichen Anforderungen in keiner Weise entsprechen.

Die Druckschrift EP 0924 834 A offenbart gemäss dem Oberbegriff das Anspruchs 1, eine Spannungsversorgungsvorrichtung zur Verwendung in einem Kraftfahrzeug mit einer Hauptspannungsquelle und einer Hilfsspannungsquelle, die zusammen mit der Hauptspannungsquelle in einem gemeinsamen Gehäuse des Verbrauchers angeordnet und über einen steuerbaren Schalter mit einer Spannungsversorgung eines Verbrauchers verbindbar ist, und die bei Ausfall der Hauptspannungsquelle einen ununterbrochenen Betrieb des Verbrauchers zumindest noch für eine gewisse Zeit gewährleistet.

Die Druckschrift EP 0 624 944 offenbart eine elektronische Vorrichtung mit einer Vielzahl von Lasten, welche mittels einer Vielzahl von Batterien separat betrieben werden, und mit einer Schalteinrichtung, welche ein Verbindungssystem zwischen den Batterien und den Lasten in Übereinstimmung mit Zuständen wie Restkapazitäten der Batterien, Laständerungen in den Lasten und Temperaturänderungen der elektronischen Vorrichtung automatisch ändert, mit dem Ziel einer effizienten Nutzung der vorhandenen Batterien. Bei Fehlen einer Hauptbatterie oder Absinken einer Spannung der Hauptbatterie ist Spannung einer Reservebatterie direkt einer Last zuführbar. Hierbei kann eine fortgesetzte Zufuhr von Energie zu einem wichtigsten Element bis zu einem Ende erfolgen.

Die Druckschrift EP 0 453 236 betrifft eine Vorrichtung zum Erfassen einer Abnormalität in einem Fahrzeuginsassen-Schutzsystem und offenbart einen Kondensator als Hilfsenergiequelle für eine Betätigungseinrichtung eines Airbags, der, parallel geschaltet zu der Betätigungseinrichtung, dessen Auslösen selbsttätig auch dann sicherstellen soll, wenn die Fahrzeugbatterie aufgrund eines Unfalls oder dergleichen außer Betrieb gesetzt wird.

Der Erfindung liegt daher die Aufgabe zugrunde, eine Kurzzeit-Spannungsversorgung zu schaffen, welche auf kostengünstige und einfache Art und Weise die für einen im Störungsfall letzten Betriebsablauf eines elektrischen Systems erforderliche Energie bereitstellt.

Diese Aufgabe wird erfindungsgemäß durch die Merkmale des Patentanspruchs 1 gelöst.

Vorteilhafte Weiterbildungen der Erfindung sind Gegenstand der beigefügten Unteransprüche.

Der Erfindung liegt der Gedanke zugrunde, dass für ein elektrisches System eine geringe Energiemenge ausreicht, um einen letzten Vorgang durchführen zu können, der zu einem sicheren und definierten Endzustand führt. Eine solche Energiemenge wird aus einer Hilfsenergieversorgung bereitgestellt, die durch eine Anordnung direkt in einer Schalteinrichtung mit kurzen Leitungspfaden und Trennelementen so gegen eine Selbstentladung geschützt ist, dass eine Überdimensionierung der Hilfsenergieversorgung oder eine separate Notenergieversorgung entfallen kann.

Im Einzelnen umfasst eine solche Kurzzeit-Spannungsversorgung für einen Verbraucher eine Schalteinrichtung mit einer Hilfs-energieversorgung; eine bei Ausfall einer Betriebsenergieversorgung von der Hilfsenergieversorgung versorgte Steuereinrichtung; und eine von der Steuereinrichtung angesteuerte Schalteinrichtung, die den Verbraucher mittels der Hilfsenergie aus der Hilfsenergieversorgung betätigt, wobei die Hilfsenergieversorgung derart ausgelegt ist, dass der Steuereinrichtung auf Anforderung durch Betätigung eines Schalters ausreichend Energie für einen nach Ausfall der Betriebsenergieversorgung letzten Betriebsablauf bereitgestellt wird.

Bevorzugt weist die Schalteinrichtung eine Diodenanordnung mit geringem Sperrstrom auf, die einer Selbstentladung der Hilfsenergieversorgung entgegen wirkt. Hierdurch kann die Hilfsenergieversorgung den Anforderungen der zu versorgenden Steuereinrichtung entsprechend dimensioniert werden.

Weiter bevorzugt wird die Diodenanordnung bei einem Ausfall der Betriebsenergieversorgung automatisch aktiviert, so dass Selbstentladungsverluste minimiert werden und die Zeit, während der die Steuereinrichtung mittels der Energie aus der Hilfsenergieversorgung betreibbar ist, verlängert wird.

Ferner sind die Hilfsenergieversorgung und die Diodenanordnung vorteilhaft in unmittelbarer Nähe des Schalters angeordnet, wodurch ein unerwünschter Spannungsabfall an längeren Leitungsabschnitten vermieden wird.

Vorteilhaft ist die Hilfsenergieversorgung ein Kondensator, besonders bevorzugt ein Elektrolytkondensator, mit einer Spannung in der Größenordnung von 40 V und mit einer Kapazität in der Größenordnung von 3000 µF.

Die Selbstentladung der Hilfsenergieversorgung ist durch die Steuereinrichtung überwachbar, bevorzugt durch vorübergehendes Unterbrechen des Ladestromkreises der Hilfsenergieversorgung und Messen der sich nach einer vorbestimmten Zeit einstellenden Spannung der Hilfsenergieversorgung, oder durch Erfassen der Zeit, bis die Spannung der Hilfsenergieversorgung auf einen vorbestimmten Wert abgefallen ist.

Weiter bevorzugt ermittelt die Steuereinrichtung die zur Verfügung stehende Energie der Hilfsenergieversorgung durch Überwachen des Spannungsabfalls zwischen der Betriebsenergieversorgung und einer Spannung an der Schalteinrichtung und Berechnen des Ladestroms aus dem Spannungsabfall zwischen der Betriebsenergieversorgung und der Spannung an der Schalteinrichtung.

Vorteilhaft ist die Hilfsenergieversorgung ständig mit der Betriebsenergieversorgung verbunden, jedoch kann ein definierter Ladezustand der Hilfsenergieversorgung dadurch überwacht werden, dass die Hilfsenergieversorgung durch einen Schalter in der Steuereinrichtung regelmäßig für eine vorbestimmte Zeit von der Betriebsenergieversorgung getrennt wird.

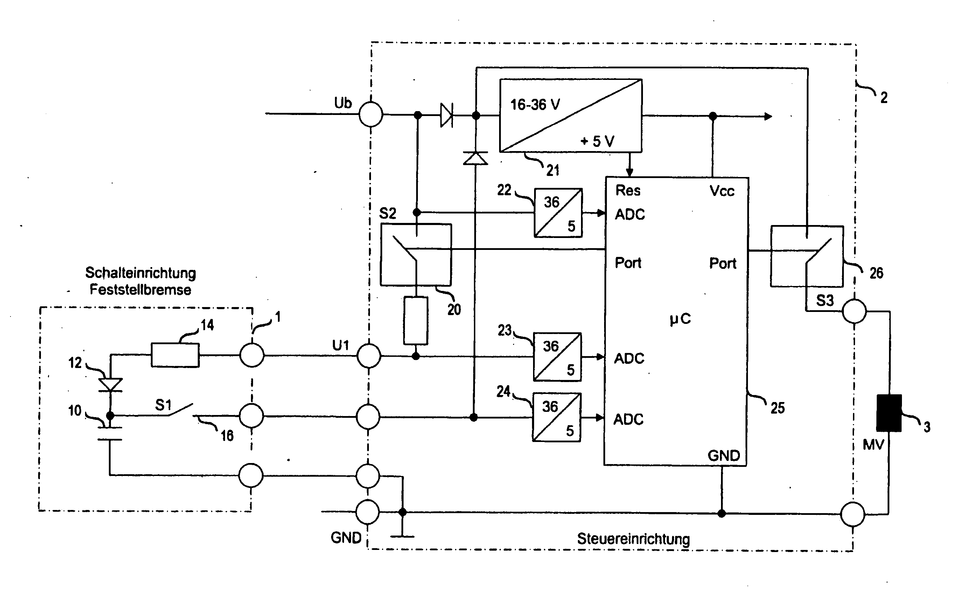

Die Erfindung wird nachstehend anhand eines bevorzugten Ausführungsbeispiels unter Bezugnahme auf die Zeichnung näher beschrieben.

Die einzige Figur zeigt vereinfacht eine Schaltungsanordnung einer Kurzzeit-Spannungsversorgung gemäß dem bevorzugten Ausführungsbeispiel.

Die Figur zeigt auszugsweise eine beispielhafte Realisierung einer Nachversorgung einer Park- bzw. Feststellbremse in einem Nutzfahrzeug mit Hilfsenergie nach einem Ausfall der Betriebsenergieversorgung. Die Realisierung ist hierbei nicht auf Nutzfahrzeuge beschränkt, sondern kann in anderen beweglichen Objekten Anwendung finden, die mit einer elektronisch gesteuerten Feststellbremse zum Sichern einer Stillstandposition des beweglichen Objekts ausgerüstet sind.

In der Figur ist links eine im Führerhaus eines Nutzfahrzeugs angeordnete Schalteinrichtung bzw. ein Schalter 1 für eine Park- oder Feststellbremse gezeigt, die/der mit entsprechenden Signalleitungen mit einer ebenfalls in dem Nutzfahrzeug angeordneten und in der Figur rechts gezeigten Steuereinrichtung 2 verbunden ist.

In der Schalteinrichtung 1 sind ein Kondensator 10, bevorzugt ein Elektrolyt-Kondensator, eine Diodenanordnung 12, eine Widerstandsanordnung 14 und ein Schalter S1 16 angeordnet.

Die Steuereinrichtung 2 des elektronischen Systems umfasst als ein für das Ausführungsbeispiel bedeutendes Element einen Schalter S2 20, der über einen Widerstand zwischen einer Versorgungsspannung bzw. Betriebsversorgung Ub und einer Spannung U1 der Schalteinrichtung 1 verschaltet ist.

Die Steuereinrichtung 2 ist an sich bekannt und wird deshalb nicht näher beschrieben. Sie umfasst im wesentlichen einige Dioden und Spannungswandler 21 bis 24 als externe Beschaltung eines Microcontrollers 25, der mittels einem implementierten Betriebsablauf die Steuerung der Feststellbremse durch Ansteuern eines Schalters S3 26 durchführt.

Der Schalter S3 26 steuert wiederum ein an einem Ausgang der Steuereinrichtung 2 angeschlossenes Ventil MV 3, beispielsweise ein Magnetventil, an, welches sodann die (nicht gezeigte) Feststellbremse betätigt.

Nachstehend wird die grundlegende Funktionsweise des Ausführungsbeispiels genauer erklärt.

Es sei angenommen, dass sich das Nutzfahrzeug in Betrieb oder Bewegung befindet. Fällt zu dieser Zeit die Betriebsenergieversorgung Ub aus, ist das elektronische System für die Feststellbremse zunächst unversorgt und wird erst dann, wenn ein Bediener oder Fahrer eine entsprechende Anweisung gibt, mit einer Hilfsenergieversorgung verbunden. Auf diese Anweisung hin führt das elektrische System mit der Energie aus der Hilfsenergieversorgung einen letzten Betriebsablauf aus und schaltet sich dann selbst ab oder wird aufgrund Energiemangels zwangsweise abgeschaltet.

In diesem Fall muss zunächst die Steuereinrichtung oder das Steuergerät aus dem aufgrund des Ausfalls der Betriebsenergieversorgung Ub stromlosen Zustand wieder in einen betriebsbereiten Zustand versetzt werden. Sodann muss die Steuereinrichtung die tatsächlich vorliegende Situation, d.h. den Ausfall der Betriebsenergieversorgung Ub und anstelle dessen den Betrieb mit Hilfsenergie, erkennen und darauf hin das Magnetventil 3, welches ein bistabiles Magnetventil sein kann, in einen entsprechend anderen Zustand steuern.

Für diese Umsteuerung in den anderen Zustand ist nur eine kleine Energiemenge erforderlich, so dass der den Energiespeicher für die Hilfsenergie bildende Kondensator 10 relativ klein, z.B. als 40 V-Kondensator mit einer Kapazität von 3000 µF, ausgestaltet werden kann.

Liegt die Spannung eines solchen Kondensators 10 aber an langen Verbindungsleitungen, Steckern und dergleichen an, ergeben sich hieraus geringe Isolationswiderstände in der Größenordnung von nur einigen MΩ, und wird sich ein solcher Kondensator nach kurzer Zeit selbst entladen.

Daher wird der Kondensator 10, der die Hilfsstrom- bzw. Hilfsenergieversorgung oder Hilfsenergiequelle bildet, vorzugsweise unmittelbar an oder in dem Schalter S1 16 angeordnet.

Ferner ist im normalen Betrieb des elektrischen Systems der Kondensator 10 ständig mit der Betriebsenergieversorgung Ub verbunden, so dass zu jedem Zeitpunkt ein ausreichender Ladezustand des Kondensators 10 und damit der Hilfsenergieversorgung gewährleistet ist. Kommt es zu einem Ausfall der Betriebsenergieversorgung Ub, wird ein Entladen des Kondensators 10 über die Strompfade der Betriebsenergieversorgung Ub durch eine Trennung des Kondensators 10 von denselben mittels der im trennenden Zustand sehr hochohmigen Diodenanordnung 12 als Trenneinrichtung (Diode) mit geringem Sperrstrom verhindert. Bevorzugt wird die Diodenanordnung 12 automatisch aktiviert, und ist die Diodenanordnung 12 aus den vorstehend genannten Gründen ebenfalls in unmittelbarer Nähe des Kondensators 10 angeordnet.

Durch die konzentrierte Anordnung der Elemente der Schalteinrichtung 1 für die Feststellbremse führen bei einem Ausfall der Betriebsenergieversorgung Ub nur kurze Leitungsabschnitte Spannung, wodurch der Gesamt-Isolationswiderstand der Schalteinrichtung in einem Zustand, in dem die Betriebsenergieversorgung Ub nicht mehr zur Verfügung steht, der letzte Betriebsablauf jedoch noch nicht angefordert wurde, in der Größenordnung von einigen GΩ liegt und damit sehr hoch ist.

Dadurch ist die Selbstentladung des Kondensators 10 als Hilfsenergieversorgung sehr gering, so dass der Zeitraum, in welchem der letzte Betriebsablauf des elektronischen Systems nach einem Ausfall der Betriebsenergieversorgung Ub noch ausgeführt werden kann, signifikant auf Stunden oder Tage erstreckt werden kann, ohne die Hilfsstromversorgung, d.h. den Kondensator 10, unnötigerweise groß oder überdimensionieren zu müssen.

Der Schalter S2 20 in der Steuereinrichtung 2 unterbricht während eines Normalbetriebs mit bestehender Betriebsenergieversorgung Ub bevorzugt auch den Ladevorgang des Kondensators 10 in der Schalteinrichtung 1 hin und wieder für eine vorbestimmte Zeit, beispielsweise für einige Stunden. Während dieser Zeit kann sich daher der Kondensator 10 langsam entladen. Nach Ablauf der vorbestimmten Zeit wird der Schalter S2 20 wieder geschlossen und der Kondensator 10 bis zum Erreichen der gewünschten Hilfsenergie aufgeladen. Eine Prüfung der Kapazität des Kondensators 10 kann beispielsweise dadurch erfolgen, dass nach dem Wiedereinschalten die Zeit gemessen wird, die vergeht, bis der Kondensator 10 vollständig geladen ist.

Eine Überwachung der Selbstentladung des Kondensators 10 erfolgt hierbei durch die Steuereinrichtung 1 derart, dass der Ladestromkreis durch den Schalter S2 20 vorübergehend unterbrochen und die sich dann einstellende Spannung des Kondensators 10 nach einer vorbestimmten Zeit nach dem Einschalten gemessen wird.

Ferner kann die zu einem bestimmten Zeitpunkt zur Verfügung stehende Hilfsenergie durch Überwachen der Batteriespannung Ub und der Schalteinrichtungsspannung U1 sowie des Ladestroms, berechnet über den Spannungsabfall zwischen der Batteriespannung Ub und der Schalteinrichtungsspannung U1, durch die Steuereinrichtung 1 ermittelt werden.

Insbesondere kann durch Messen der Spannung U1 der Schalteinrichtung 1 während des Wiederaufladens oder Nachladens des Kondensators 10 auf das Ausmaß der Selbstentladung des Kondensators 10 geschlossen werden, und kann anhand der Aufladegeschwindigkeit des Kondensators 10 im Verlauf des Wiederaufladens die Mindestkapazität des Kondensators 10 überwacht werden.

Bevorzugt weist die Schalteinrichtung 1 zu dem Schalter 16 redundante, nicht gezeigte Schalter, Potentiometer oder andere eine Anweisung eines Bedieners erfassende Elemente auf. Derartige Elemente dienen dazu, im störungsfreien Betrieb eine Warnung auszugeben und eine Fehlauslösung des letzten Betriebsablaufs des elektronischen Systems zu verhindern.

Somit kann durch Betätigen des Schalters S1 16 der Schalteinrichtung 1 die Park- bzw. Feststellbremse des Nutzfahrzeugs durch kurzes Ansteuern des Magnetventils MV 3 eingelegt werden, und wird bei einem Ausfall der Betriebsenergieversorgung Ub die Energieversorgung der Steuereinrichtung 2 und damit der darin enthaltenen Recheneinrichtung (Microcontroller) 25 sowie des Magnetventils MV 3 durch die Hilfsenergie aus dem Kondensator 10 in der Schalteinrichtung 1 gewährleistet.

### Bezugszeichenliste

- 1: Schalteinrichtung
- 2: Steuereinrichtung
- 3: Magnetventil
- 10: Kondensator
- 12: Diode
- 14: Widerstand
- 16: Schalter
- 20: Schalter
- 21: Spannungswandler
- 22: Spannungswandler
- 23: Spannungswandler
- 24: Spannungswandler
- 25: Microcontroller
- 26: Schalter

## Patentansprüche

1. Kurzzeit-Spannungsversorgung für eine Feststellbremse für ein Fahrzeug, mit:
- einer ersten Schalteinrichtung (1) mit einer Hilfsenergieversorgung (10), die derart ausgelegt ist, dass für eine Steuereinrichtung (2) auf Anforderung durch Betätigung eines Schalters (16) ausreichend Energie für einen nach Ausfall einer Betriebsenergieversorgung (Ub) letzten Betriebsablauf bereitgestellt wird; und
- einer von der Steuereinrichtung (2) angesteuerten zweiten Schalteinrichtung (26), die einen die Feststellbremse betätigenden Verbraucher (3) mittels der Hilfsenergie aus der Hilfsenergieversorgung (10) betätigt, **dadurch gekennzeichnet, dass**
- der Schalter (16) in der ersten Schalteinrichtung (1) angeordnet ist;
- die erste Schalteinrichtung (1) eine Diodenanordnung (12) mit geringem Sperrstrom aufweist, die einer Selbstentladung der Hilfsenergieversorgung (10) entgegenwirkt;
- die Hilfsenergieversorgung ein Kondensator (10) ist; und
- der Kondensator (10) und die Diodenanordnung (12) derart in unmittelbarer Nähe des Schalters (16) angeordnet sind, dass ein als Kathode wirkender Anschluss der Diodenanordnung (12), ein Anschluss des Kondensators (10) und ein Anschluss des ersten Schalters (16) an einem gemeinsamen Knotenpunkt mit kurzen Leitungsabschnitten verschaltet sind, und derart dimensioniert sind, dass bei geöffnetem Schalter (16) ein Gesamt-Isolationswiderstand der Schalteinrichtung (1) zumindest in einem Zustand, in dem die Betriebsenergieversorgung (Ub) nicht mehr zur Verfügung steht, der letzte Betriebsablauf jedoch noch nicht angefordert wurde, in der Größenordnung von einigen GΩ liegt und derart sehr hoch ist, dass sich ein Zeitraum, in welchem der letzte Betriebsablauf mit Energie aus der Hilfsenergieversorgung (10) ausführbar ist, auf Stunden oder Tage erstreckt.

2. Kurzzeit-Spannungsversorgung nach Anspruch 1, **dadurch gekennzeichnet, dass** die Diodenanordnung (12) bei einem Ausfall der Betriebsenergieversorgung automatisch aktiviert wird.

3. Kurzzeit-Spannungsversorgung nach Anspruch 1, **dadurch gekennzeichnet, dass** der Kondensator ein Elektrolytkondensator mit einer Spannung in der Größenordnung von 40 V und mit einer Kapazität in der Größenordnung von 3000 µF ist.

4. Kurzzeit-Spannungsversorgung nach Anspruch 1, **dadurch gekennzeichnet, dass** eine Selbstentladung der Hilfsenergieversorgung (10) durch die Steuereinrichtung (2) überwachbar ist.

5. Kurzzeit-Spannungsversorgung nach Anspruch 4, **dadurch gekennzeichnet, dass** die Steuereinrichtung (2) die Selbstentladung der Hilfsenergieversorgung (10) durch vorübergehendes Unterbrechen des Ladestromkreises der Hilfsenergieversorgung (10) und Messen der sich nach einer vorbestimmten Zeit einstellenden Spannung der Hilfsenergieversorgung (10) erfasst.

6. Kurzzeit-Spannungsversorgung nach Anspruch 4, **dadurch gekennzeichnet, dass** die Steuereinrichtung (2) die Selbstentladung der Hilfsenergieversorgung (10) durch Erfassen der Zeit, bis die Spannung der Hilfsenergieversorgung (10) auf einen vorbestimmten Wert abgefallen ist, ermittelt.

7. Kurzzeit-Spannungsversorgung nach Anspruch 1, **dadurch gekennzeichnet, dass** die Steuereinrichtung (2) die zur Verfügung stehende Energie der Hilfsenergieversorgung (10) durch Überwachen des Spannungsabfalls zwischen der Betriebsenergieversorgung (Ub) und einer Spannung (U1) an der Schalteinrichtung (1) und Berechnen des Ladestroms aus dem Spannungsabfall zwischen der Betriebsenergieversorgung (Ub) und der Spannung (U1) und/oder durch Überwachen der Ladezeit bis zum Erreichen des vollen Ladezustands des Kondensators (10) ermittelt.

8. Kurzzeit-Spannungsversorgung nach Anspruch 1, **dadurch gekennzeichnet, dass** die Hilfsenergieversorgung (10) ständig mit der Betriebsenergieversorgung (Ub) verbunden ist.

9. Kurzzeit-Spannungsversorgung nach Anspruch 1, **dadurch gekennzeichnet, dass** die Hilfsenergieversorgung (10) durch einen Schalter (20) in der Steuereinrichtung (2) regelmäßig für eine vorbestimmte Zeit von der Betriebsenergieversorgung (Ub) getrennt wird.

## Claims

1. Temporary voltage supply for a parking brake for a vehicle,
having:
- a first switching device (1) with an auxiliary power supply (10), which is configured in such a way that sufficient energy for an operating sequence which is the last after the failure of an operating power supply (Ub) is made available for a control device (2) on request by activation of a switch (16); and
- a second switching device (26), which is actuated by the control device (2) and which activates a load (3), activating the parking brake, by means of the auxiliary power from the auxiliary power supply (10),
**characterized in that**
- the switch (16) is arranged in the first switching device (1);
- the first switching device (1) has a diode arrangement (12) with a low cut-off current which counteracts self-discharging of the auxiliary power supply (10);
- the auxiliary power supply is a capacitor (10); and
- the capacitor (10) and the diode arrangement (12) are arranged in the immediate vicinity of the switch (16) in such a way that a terminal of the diode arrangement (12) which acts as a cathode, a terminal of the capacitor (10) and a terminal of the first switch (16) are connected to a common node point with short line sections and are dimensioned in such a way that when the switch (16) is opened a total insulation resistance of the switching device (1) is of the order of magnitude of several GΩ, at least in a state in which the operating power supply (Ub) is no longer available but the last operating sequence has not yet been requested, and said total insulation resistance is very high such that a time period in which the last operating sequence can be executed with power from the auxiliary power supply (10) extends over hours or days.

2. Temporary voltage supply according to Claim 1, **characterized in that** the diode arrangement (12) is activated automatically if the operating power supply fails.

3. Temporary voltage supply according to Claim 1, **characterized in that** the capacitor is an electrolyte capacitor with a voltage of the order of magnitude of 40 V and with a capacitance of the order of magnitude of 3000 µF.

4. Temporary voltage supply according to Claim 1, **characterized in that** self-discharging of the auxiliary power supply (10) can be monitored by means of the control device (2).

5. Temporary voltage supply according to Claim 4, **characterized in that** the control device (2) senses the self-discharging of the auxiliary power supply (10) by temporarily disconnecting the charge circuit of the auxiliary power supply (10) and measuring the voltage which occurs at the auxiliary power supply (10) after a predetermined time.

6. Temporary voltage supply according to Claim 4, **characterized in that** the control device (2) determines the self-discharging of the auxiliary power supply (10) by detecting the time until the voltage of the auxiliary power supply (10) has dropped to a predetermined value.

7. Temporary voltage supply according to Claim 1, **characterized in that** the control device (2) determines the available energy of the auxiliary power supply (10) by monitoring the voltage drop between the operating power supply (Ub) and a voltage (U1) at the switching device (1) and calculating the charge current from the voltage drop between the operating power supply (Ub) and the voltage (U1) and/or by monitoring the charge time up to the time when the fully charged state of the capacitor (10) is reached.

8. Temporary voltage supply according to Claim 1, **characterized in that** the auxiliary power supply (10) is continuously connected to the operating power supply (Ub).

9. Temporary voltage supply according to Claim 1, **characterized in that** the auxiliary power supply (10) is regularly disconnected from the operating power supply (Ub) for a predetermined time by means of a switch (20) in the control device (2).

## Revendications

1. Alimentation en courant à service temporaire pour un frein de stationnement d'un véhicule, comprenant:
- un premier dispositif de commutation (1) à une unité d'alimentation en énergie auxiliaire (10), qui est conçue d'une telle façon, que pour un dispositif de commande (2), à demande, une quantité suffisante d'énergie soit rendue disponible par l'actionnement d'un commutateur (16) pour un dernier cycle de fonctionnement après le défaillance d'une unité d'alimentation en énergie de régime (Ub); et
- un deuxième dispositif de commutation (26) commandé par ledit dispositif de commande (2), qui actionne un récepteur (3), qui commande le frein de stationnement, moyennant l'énergie auxiliaire provenant de ladite unité d'alimentation en énergie auxiliaire (10)
**caractérisé en ce**
- **que** ledit commutateur (16) est disposé dans ledit premier dispositif de commutation (1);
- **que** ledit premier dispositif de commutation (1) comprend un arrangement de diodes (12) à faible courant en sens non-conducteur, qui oppose un décharge spontané de ladite unité d'alimentation en énergie auxiliaire (10);
- **que** ladite unité d'alimentation en énergie auxiliaire est un condensateur; et
- **que** ledit condensateur (10) et ledit arrangement de diodes (12) sont disposés à proximité directe dudit commutateur (16) d'une telle manière, qu'un raccord dudit arrangement de diodes (12), qui agit en tant que cathode, un raccord dudit condensateur (10) et un raccord dudit premier commutateur (16) sont montés à un point nodal commun à des courts tronçons de conducteur, et sont si dimensionnés, que, quand ledit commutateur (16) est ouvert, une résistance d'isolement total dudit dispositif de commutation (1) est de l'ordre de quelques GO au moins en un état auquel l'alimentation en énergie de régime (Ub) n'est plus disponible mais le dernier cycle de service n'était pas encore demandé, en étant si haute qu'un intervalle, au cours duquel le dernier cycle de service se peut exécuter moyennant de l'énergie de ladite unité d'alimentation en énergie auxiliaire (10), s'étend sur des heures ou jours.

2. Alimentation en courant à service temporaire selon la revendication 1, **caractérisé en ce que** ledit arrangement de diodes (12) est activé de façon automatique au cas de défaillance de l'unité d'alimentation en énergie de régime.

3. Alimentation en courant à service temporaire selon la revendication 1, **caractérisé en ce que** ledit condensateur est un condensateur à électrolyte à une tension de l'ordre de 40 V et à une capacité de l'ordre de 3000 µF.

4. Alimentation en courant à service temporaire selon la revendication 1, **caractérisé en ce qu'**on peut surveiller la décharge spontanée de ladite unité d'alimentation en énergie auxiliaire (10) moyennant ledit dispositif de commande (2).

5. Alimentation en courant à service temporaire selon la revendication 1, **caractérisé en ce que** ledit dispositif de commande (2) détecte la décharge spontanée de ladite unité d'alimentation en énergie auxiliaire (10) par une interruption temporaire du circuit de courant de charge de ladite unité d'alimentation en énergie auxiliaire (10) et par la mesure de la tension de ladite unité d'alimentation en énergie auxiliaire (10), qui s'ajuste après un intervalle prédéterminé.

6. Alimentation en courant à service temporaire selon la revendication 4, **caractérisé en ce que** ledit dispositif de commande (2) établit la décharge spontanée de ladite unité d'alimentation en énergie auxiliaire (10) par l'établissement de l'intervalle jusqu'à la chute de la tension de ladite unité d'alimentation en énergie auxiliaire (10) à un niveau prédéterminé.

7. Alimentation en courant à service temporaire selon la revendication 1, **caractérisé en ce que** le dispositif de commande (2) établit l'énergie disponible de ladite unité d'alimentation en énergie auxiliaire (10) par surveillance de la chute de tension entre ladite alimentation en énergie de régime (10) et une tension (U1) audit dispositif de commutation (1) et par calcul du courant de charge en le dérivant de la chute de tension entre l'alimentation en énergie de régime (Ub) et la tension (U1) et/ou par surveillance du temps de charge jusqu'à l'achèvement de l'état de charge complet dudit condensateur (10).

8. Alimentation en courant à service temporaire selon la revendication 1, **caractérisé en ce que** ladite alimentation en énergie auxiliaire (10) est constamment raccordée à ladite alimentation en énergie de régime (Ub).

9. Alimentation en courant à service temporaire selon la revendication 1, **caractérisé en ce que** ladite alimentation en énergie auxiliaire (10) est isolé, de façon régulière, de ladite alimentation en énergie de régime (U(b) par un commutateur (20) dans ledit dispositif de commande (2) pour un intervalle prédéterminé.
